# FASCICULE DE BREVET EUROPEEN

(11) **EP 1 447 731 B1**
(45) Date de publication et mention de la délivrance du brevet: **14.04.2010**
(21) Numéro de dépôt: 04290309.6
(22) Date de dépôt: 06.02.2004
(51) Int. Cl.: G05G 5/02, G05G 7/06, G05G 5/00, G05G 1/04, A01B 71/02

(54) **Procédé et dispositif de commande extérieure de relevage**
Verfahren und Vorrichtung zur externen Hebungssteuerung
Method and apparatus for external control of lifting

(30) Priorité: 14.02.2003 FR 0301792
(43) Date de publication de la demande: 18.08.2004
(73) Titulaire: RENAULT AGRICULTURE, 78141 Velizy-Villacoublay (FR)
(72) Inventeur: Charmant, Jérôme, 92360 Meudon la Foret (FR)
(74) Mandataire: Casalonga, Axel

(56) Documents cités:
- DE-U- 8 910 127
- FR-A- 2 300 204
- FR-A- 2 709 226
- US-A- 2 354 891
- US-A- 3 874 248

## Description

La présente invention se rapporte au relevage des outils portés par un tracteur agricole ou attelés à celui-ci.

Elle concerne une commande extérieure de relevage, venant compléter une commande principale située à l'intérieur de la cabine du tracteur, de manière à permettre à l'opérateur de manoeuvrer le relevage de l'extérieur, sans remonter dans la cabine.

Plus précisément, cette invention a pour objet un procédé de commande extérieure de tracteur agricole au moyen d'une poignée rotative débrayée entraînant un organe de manoeuvre.

Elle concerne également un dispositif convenant pour la mise en oeuvre de ce procédé.

Pour répondre aux exigences de sécurité requises par la législation, on peut appliquer sur une commande extérieure de relevage un premier principe, dit « de l'homme mort », selon lequel le relâchement de la commande par l'opérateur interrompt presqu'instantanément le déplacement du relevage, qui est alors immobilisé en position tant que l'opérateur n'intervient pas à nouveau de façon active sur la commande. Il est également possible de se conformer aux normes de sécurité en adoptant un système « pas à pas », contraignant l'opérateur à répéter un grand nombre de fois son intervention sur la commande pour déplacer utilement le relevage.

On connaît une commande extérieure de relevage pas à pas, comprenant une molette montée sur un enrouleur de câble. Le câble transmet de façon continue la consigne de déplacement à la commande principale du relevage située en cabine. La molette est manipulable dans les deux sens, correspondant respectivement à la montée et à la descente du relevage. Toutefois, la molette est recouverte partiellement par un capot qui empêche l'opérateur de l'empoigner complètement, de manière à limiter le déplacement du câble à chaque mouvement de la main. La manipulation de la molette est donc malaisée selon son principe même de conception.

La publication FR 2709 226, au nom de la demanderesse, décrit un autre dispositif pas à pas, qui comprend un levier mobile autour d'une partie fixe du tracteur. Ce levier est déformé en flexion par l'opérateur pour être déplacé cran par cran sur un secteur cranté. Le levier retrouve automatiquement sa position initiale dès qu'il est relâché, de manière à immobiliser le relevage, selon le principe de l'homme mort. Cette commande respecte donc simultanément les deux principes énoncés plus haut. Toutefois, la déformation mécanique d'un levier ne permet pas d'obtenir un système plus commode que le précédent.

La présente invention vise à remédier aux inconvénients des commandes de relevage extérieures connues, en réalisant une commande d'un maniement aisé tout en obéissant aux règles de sécurité.

Dans ce but, elle propose un système à câble, dont l'entraînement est assuré par un mouvement rotatif alternatif à débattement angulaire limité de la poignée avec maintien en position enclenchée sur la poignée d'une palette par la main de l'opérateur, dans les deux sens de rotation de la poignée.

Conformément à l'invention, l'inversion du sens de déplacement de l'organe de manoeuvre est obtenu en appuyant sur un bouton d'inversion prévu sur la poignée, et la poignée est débrayée dès que la palette est relâchée.

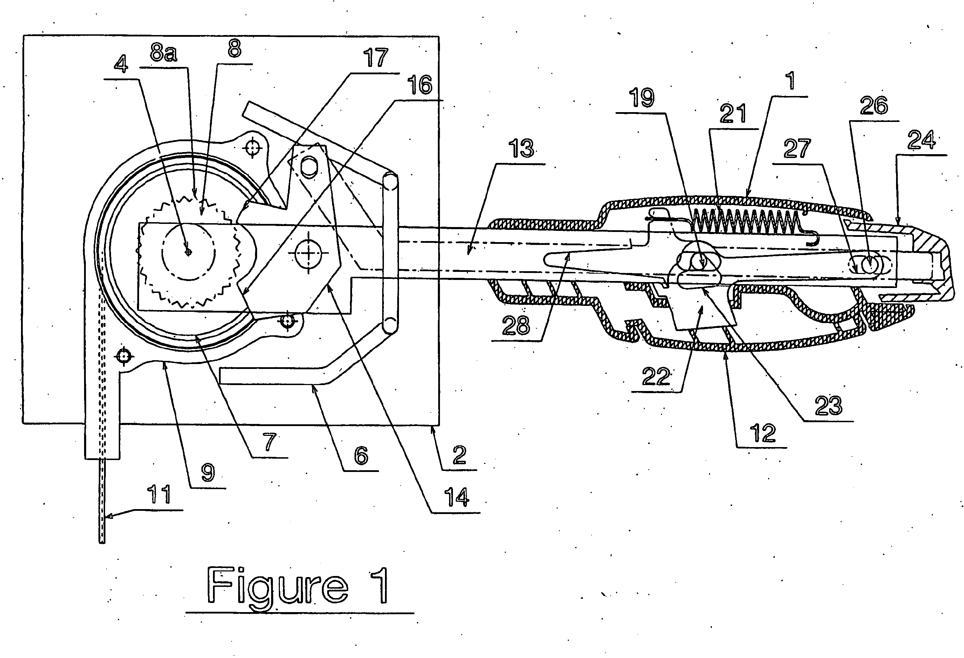

D'autres caractéristiques et avantages de la présente invention apparaîtront clairement à la lecture de la description suivante d'un mode de réalisation non limitatif de celle-ci, en se référant aux dessins annexés sur lesquels les figures 1, 2 et 3 montrent le dispositif proposé respectivement en position débrayée, en position de montée et en position de descente du relevage.

Le dispositif illustré par les figures est composé d'une poignée 1 montée sur une plaque 2 fixée sur une partie fixe (non représentée), par exemple une aile du tracteur. La poignée 1 peut tourner sur la plaque 2 autour d'un axe 4 dans les limites autorisées par une butée 6 intégrée ou rapportée sur celle-ci. Un enrouleur de câble 7 est maintenu sur la plaque 2 par un carter bride 9. L'enrouleur 7 est coaxial à la poignée 1. Il porte une roue dentée 8 également coaxiale à la poignée, et il est solidaire en rotation de celle-ci. Le câble 11 est du type « push-pull ». Il actionne la commande principale du relevage (non représentée), située dans la cabine du tracteur. La poignée porte une palette longitudinale 12 enfoncée par l'opérateur lorsqu'il resserre sa main autour de la poignée, et un bouton 24 d'inversion de sens de déplacement du relevage à son extrémité.

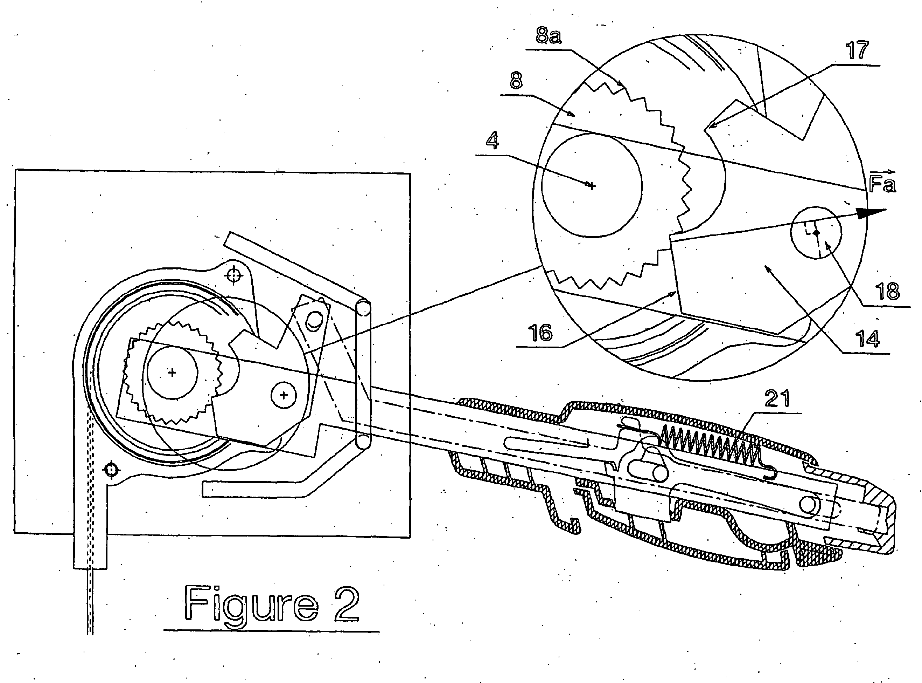

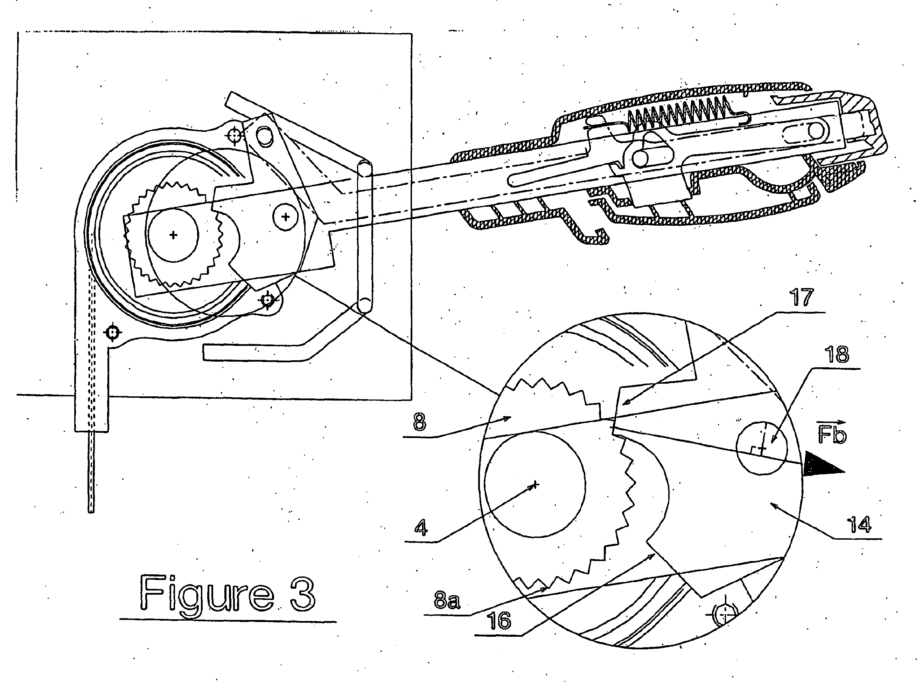

Le mécanisme intérieur de la poignée est composé d'une tringle 13 pouvant se déplacer longitudinalement à l'intérieur de celle-ci. La tringle est articulée sur un cliquet 14 maintenu en appui contre la roue dentée dans ses deux positions embrayées (figures 2 et 3), c'est à dire lorsque la palette 12 est enclenchée, et écarté de celle-ci en position débrayée (figure 1), lorsque la palette 12 est relâchée.

Le cliquet 14 présente deux bras 16, 17 maintenus tous les deux à l'écart de la roue dentée 8 en position débrayée, et repoussés individuellement contre celle-ci en position embrayée de manière à entraîner la roue dentée en sens horaire ou anti-horaire.

En position embrayée, un des bras 16 ou 17 déplace les dents 8a de la roue dentée 8 dans un premier sens de rotation de la poignée, et glisse sur celles-ci sans les déplacer dans le second. Le cliquet 14 est monté sur un pivot 18 . Il bascule autour du pivot 18 sous la poussée ou la traction de la tringle 13, de part et d'autre de sa position de débrayage, la tringle coulissant pour sa part à l'intérieur de la poignée 1 de part et d'autre d'une position centrale de débrayage. La tringle 13 porte un pion 19. Un ressort 21 est fixé par une première extrémité sur la tringle 13, et par la seconde sur la poignée 1. Le ressort 21 tend à rappeler la tringle 13 vers la droite des schémas.

La poignée 1 comporte également un verrou intérieur 22. déplacé à l'intérieur de celle-ci lors de l'enfoncement de la palette 12. Le pion 19 est engagé dans une lumière 23 découpée dans le verrou 22. La lumière 23 autorise le déplacement longitudinal de la tringle 13 de part et d'autre de sa position centrale lorsque le verrou 22 est repoussé vers l'intérieur de la poignée 1 par la palette 12.

De façon non limitative, la lumière 23 peut avoir une forme triangulaire. En position débrayée (figure 1), le verrou est poussé vers le bas par le second ressort 28, retenant la tringle en position centrale par le pion 19.

Pour faire monter le relevage, l'opérateur appuie sur la palette 12 et déplace la poignée 1 selon un mouvement de rotation alternatif. L'enfoncement de la palette 12, conjugué à l'effort de traction du ressort 21 sur la tringle 13 permet de tirer la tringle vers la droite à l'écart du cliquet 14, de manière à faire basculer celui-ci dans sa première position embrayée, illustrée par la figure 2.

Pour pouvoir faire descendre le relevage, l'opérateur appuie sur la palette 12, et enfonce le bouton d'inversion 24. Ce dernier repousse la tringle 13 vers le cliquet 14, de manière à faire basculer celui-ci dans sa seconde position embrayée, illustrée par la figure 3.

Le débattement longitudinal de la tringle 13 à l'intérieur de la poignée 1 est limité par la course d'un second pion 26, porté par la poignée, à l'intérieur d'une lumière 27 de la tringle. Enfin, le second ressort 28 pousse le verrou 22 vers le bas dès que la palette 12 est relâchée, ramenant ainsi la tringle 13 en position centrale de la figure 1, aussi bien à partir de la première que de la seconde position embrayée, lors du relâchement de la palette 12. Le second ressort 28 a une charge supérieure à celle du premier ressort 21

En se reportant à la figure 1, on voit que lorsque la palette 12 et le bouton 24 sont relâchés, le verrou 22 est poussé vers le bas par le ressort 28, la lumière 23 du verrou 22 maintient la tringle 13 en position centrale, et les deux bras 16, 17 sont écartés de la roue dentée 8. Comme indiqué plus haut, la poignée est alors débrayée, et son déplacement n'a aucune incidence sur le câble 11.

Sur la figure 2, la palette 12 est enclenchée, alors que le bouton 24 n'est pas enfoncé. Dans cette situation, correspondant par exemple à la montée du relevage, le verrou 22 est repoussé vers le haut par la palette 12 à l'encontre du ressort 28. La tringle s'est déplacée vers la droite sous la traction du ressort 21, et le cliquet a basculé vers la droite. Le bras inférieur 16 est plaqué contre la roue dentée 8 et coopère avec les dents 8a. La force de réaction Fa des dents sur le bras engendrée par le déplacement vers le bas de la poignée 1 est orientée entre le pivot 18 du cliquet et l'axe 4 de la roue. Le déplacement de la poignée vers le bas (sens horaire) repousse les dents 8a de manière à enrouler le câble de l'enrouleur, alors que son déplacement vers le haut (sens anti-horaire) ne produit aucun déplacement, car le bras glisse sur les dents en s'échappant de celles-ci. Tant que la palette est maintenue enfoncée, le déplacement alternatif de la poignée vers le haut et vers le bas produit une succession de petits déplacements pas à pas du câble 11 dans le sens de son enroulement, se traduisant par exemple au niveau de la commande principale de relevage par une montée pas à pas du système de relevage et de l'outil attelé ou porté. Comme indiqué plus haut, le relâchement de la poignée entraîne immédiatement le retrait du bras 16 à l'écart de la roue dentée, et le débrayage de la poignée sous l'action du ressort 28, dont la charge est supérieure à celle du ressort 21.

Sur la figure 3, la palette 12 est enclenchée et le bouton 24 est enfoncé. Dans cette situation, correspondant par exemple à la descente du relevage, le verrou 22 est repoussé vers le haut par la palette 12 à l'encontre du ressort 28. La tringle 13 s'est déplacée vers la gauche à l'encontre du ressort 21 sous la poussée du bouton 24, et le cliquet 14 a basculé vers la gauche. Le bras supérieur 17 est plaqué contre la roue dentée 8 et coopère avec les dents 8a. La force de réaction Fb des dents 8a sur le bras 17 engendrée par le déplacement de la poignée 1 vers le haut est orientée entre le pivot 18 du cliquet et l'axe 4 de la roue de sorte que le déplacement de la poignée vers le haut (sens anti-horaire) repousse les dents dans le sens du déroulement du câble 11, alors que son déplacement vers le bas (sens horaire) est sans effet, car le bras glisse alors sur les dents en s'échappant de celles-ci sans les repousser. Tant que la palette 12 et le bouton 24 sont maintenus enfoncés, le déplacement alternatif de la poignée vers le haut et vers le bas produit une succession de petits déplacements successifs du câble 11 dans le sens de son déroulement, se traduisant par exemple au niveau de la commande principale de relevage par une descente pas à pas du système de relevage et de l'outil attelé ou porté par celui-ci. Comme précédemment, le relâchement de la palette entraîne immédiatement le retrait du bras 16 à l'écart de la roue dentée et le débrayage de la poignée sous l'action du ressort 28, dont la charge est supérieure à celle du ressort 21.

En conclusion, il faut souligner que la descente, comme la montée du relevage s'effectuent avec un déplacement alternatif de la poignée en maintenant la palette enfoncée, et que dans les deux cas le relâchement de celle-ci se traduit par un débrayage instantané de la commande.

## Revendications

1. Procédé de commande extérieure de relevage d'outil de tracteur agricole au moyen d'une poignée rotative débrayable (1) entraînant un organe de manoeuvre (11), **caractérisé en ce que** cet entraînement est assuré par un mouvement rotatif alternatif de la poignée (1) vers le haut et vers le bas à débattement angulaire limité avec maintien en position enclenchée sur la poignée (1) d'une palette (12) par la main de l'opérateur dans les deux sens de rotation de la poignée.

2. Procédé de commande selon la revendication 1, **caractérisé en ce que** l'inversion du sens de déplacement de l'organe de manoeuvre (11) est obtenu en appuyant sur un bouton d'inversion (24) prévu sur la poignée.

3. Procédé de commande selon la revendication 1, ou 2, **caractérisé en ce que** la poignée (1) est débrayée dès que la palette (12) est relâchée.

4. Dispositif de commande extérieure de relevage d'outil de tracteur agricole comprenant une poignée rotative (1) susceptible d'entraîner un câble de manoeuvre (11), des moyens d'embrayage (12, 24) et de débrayage (13, 14, 22, 28) de la poignée (1), la poignée comprenant une palette (12), et des moyens (6) limitant son débattement angulaire en rotation, **caractérisé en ce qu'**il comporte une roue dentée (8) solidaire en rotation d'un enrouleur de câble (7) tournant autour du même axe (4) que la poignée (1) et un cliquet (14) maintenu en appui contre la roue dentée lorsque les moyens d'embrayage (12, 14) sont enclenchés.

5. Dispositif de commande selon la revendication 4, **caractérisé en ce que** le cliquet (14) présente deux bras (16, 17) maintenus tous les deux à l'écart de la roue dentée (8) en position débrayée, et repoussés individuellement contre celle-ci en position embrayée de manière à entraîner la roue dentée dans deux sens de rotation opposés.

6. Dispositif de commande selon la revendication 5, **caractérisé en ce que** chaque bras (16, 17) déplace les dents (8a) de la roue dentée (8) dans un premier sens de rotation de la poignée, et glisse sur celles-ci sans les déplacer dans le second sens de rotation.

7. Dispositif de commande selon la revendication 5 ou 6, **caractérisé en ce que** le cliquet (14) pivote de part et d'autre de sa position de débrayage sous l'action d'une tringle (13) coulissant à l'intérieur de la poignée (1) de part et d'autre d'une position centrale de débrayage.

8. Dispositif de commande selon la revendication 7, **caractérisé en ce que** l'enfoncement de la palette (12) permet à un premier ressort (21) de tirer la tringle (13) à l'écart du cliquet (14) de manière à faire basculer celui-ci dans une première position embrayée.

9. Dispositif de commande selon la revendication 7, **caractérisé en ce que** la poignée présente un bouton d'inversion (24) dont l'enfoncement repousse la tringle (13) vers le cliquet (14) de manière à faire basculer celui-ci dans une seconde position embrayée.

10. Dispositif de commande selon revendication 8 ou 9, **caractérisé en ce que** la poignée (1) comporte un verrou intérieur (22) déplacé à l'intérieur de celle-ci lors de l'enfoncement de la palette (12) de manière à libérer la tringle (13).

11. Dispositif de commande selon la revendication 10, **caractérisé en ce que** la tringle porte un pion (19) engagé dans une lumière (23) découpée dans le verrou (22) de manière à autoriser le déplacement longitudinal de la tringle (13) de part et d'autre de sa position centrale lorsque le verrou (22) est repoussé vers l'intérieur de la poignée par la palette (12).

12. Dispositif de commande selon la revendication 9 10 ou 11, **caractérisé en ce qu'**il comporte un second ressort (28) poussant le verrou (22) vers l'extérieur de la poignée de manière à repousser la tringle (13) en position centrale par l'intermédiaire du pion (19) et du verrou (22) lors du relâchement de la palette (12).

13. Dispositif de commande selon la revendication 10, 11 ou 12, **caractérisé en ce que** le verrou (22) maintient la tringle (13) en position centrale lorsque la palette (12) est relâchée.

## Claims

1. Control method for externally controlling the tool lift of an agricultural tractor using a disengageable rotary handle (1) driving an operating member (11), **characterized in that** this drive is provided through a back and forth rotary movement of the handle (1) up and down through a limited angular travel with the operator using his hand to keep a paddle (12) on the handle (1) engaged in both directions of rotation of the handle.

2. Control method according to Claim 1, **characterized in that** the direction of travel of the operating member (11) can be reversed by pressing a reverse button (24) provided on the handle.

3. Control method according to Claim 1 or 2, **characterized in that** the handle (1) becomes disengaged as soon as the paddle (12) is released.

4. Control device for externally controlling the tool lift of an agricultural tractor, comprising a rotary handle (1) able to drive an operating cable (11), means (12, 24) for engaging and means (13, 14, 22, 28) for disengaging the handle (1), the handle comprising a paddle (12), and means (6) limiting its rotational angular travel, **characterized in that** it comprises a toothed wheel (8) rotatably secured to a cable winder (7), rotating about the same axis (4) as the handle (1), and a pawl (14) kept pressed against the toothed wheel when the engagement means (12, 14) are engaged.

5. Control device according to Claim 4, **characterized in that** the pawl (14) has two arms (16, 17) both kept away from the toothed wheel (8) in the disengaged position, and individually pushed against it in the engaged position so as to drive the toothed wheel in two opposite directions of rotation.

6. Control device according to Claim 5, **characterized in that** each arm (16, 17) moves the teeth (8a) of the toothed wheel (8) in a first direction of rotation of the handle, and slides over these teeth without moving them in the second direction of rotation.

7. Control device according to Claim 5 or 6, **characterized in that** the pawl (14) pivots about its disengaged position under the action of a linkage (13) sliding inside the handle (1) about a central disengaged position.

8. Control device according to Claim 7, **characterized in that** depressing the paddle (12) allows a first spring (21) to pull the linkage (13) away from the pawl (14) so as to cause this pawl to pivot into a first engaged position.

9. Control device according to Claim 7, **characterized in that** the handle has a reverse button (24), depression of which pushes the linkage (13) back towards the pawl (14) so as to cause this pawl to pivot into a second engaged position.

10. Control device according to Claim 8 or 9, **characterized in that** the handle (1) has an internal latch (22) moved within this handle when the paddle (12) is depressed so as to release the linkage (13).

11. Control device according to Claim 10, **characterized in that** the linkage bears a pin (19) engaged in a slot (23) cut in the latch (22) so as to allow the linkage (13) to move longitudinally about its central position when the latch (22) is pushed back towards the inside of the handle by the paddle (12).

12. Control device according to Claim 9, 10 or 11, **characterized in that** it comprises a second spring (28) pushing the latch (22) towards the outside of the handle so as to push the linkage (13) back into a central position via the pin (19) and the latch (22) when the paddle (12) is released.

13. Control device according to Claim 10, 11 or 12, **characterized in that** the latch (22) keeps the linkage (13) in the central position when the paddle (12) is released.

## Patentansprüche

1. Verfahren zur externen Steuerung einer Hebeeinrichtung eines Werkzeuges eines landwirtschaftlichen Tracktors mittels eines entkuppelbaren Schwenkhebels (1) zum Antreiben eines Bestätigungselementes (11), **dadurch gekennzeichnet, dass** das Antreiben mittels einer alternativen Schwenkbewegung des Hebels (1) hin und her längs eines beschränkten Winkelhubs bewirkt wird, wobei durch die Hand des Bedieners in beiden Schwenkrichtungen des Hebels eine Platte (12) an dem Hebel in der betätigten Stellung gehalten wird.

2. Steuerverfahren nach Anspruch 1, **dadurch gekennzeichnet, dass** die Umkehrung der Betätigungsrichtung des Betätigungselementes (11) erreicht wird, indem ein Umkehrknopf (24) betätigt wird, der an dem Hebel vorgesehen ist.

3. Steuerverfahren nach Anspruch 1 oder 2 **dadurch gekennzeichnet, dass** der Hebel (1) entkuppelbar ist, indem die Platte (12) freigegeben wird.

4. Externe Steuerungseinrichtung für Hebeeinrichtungen eines Werkzeuges an einem landwirtschaftlichen Traktor,
mit einem Schenkhebel (1) zum Antreiben eines Betätigungskabels (11),
mit Mitteln zum Ankuppeln (12, 24) und Abkuppeln (13, 14, 22, 28) des Hebels (1), der eine Platte (12) trägt und
**dadurch gekennzeichnet, dass** ein Zahnrad (8) vorgesehen ist, das mit einer Kabelwickeleinrichtung (7) drehfest verbunden ist und das um dieselbe Achse (4) wie der Schenkhebel rotiert, und dass eine Klinkeneinrichtung (14) vorgesehen ist, die gegen das Zahnrad in Eingriff gehalten wird, wenn die Ankuppelmittel (12, 14) betätigt sind.

5. Steuerungseinrichtung nach Anspruch 4, **dadurch gekennzeichnet, dass** die Klinkeneinrichtung (14) zwei Arme (16, 17) aufweisen, die in der entkuppelten Stellung im Abstand zu dem Zahnrad (8) gehalten sind und in der eingekuppelten Stellung individuell gegen das Zahnrad zurückgedrückt werden, um das Zahnrad in den in beiden einander entgegengesetzten Drehrichtungen anzutreiben.

6. Steuerungseinrichtung nach Anspruch 5, **dadurch gekennzeichnet, dass** jeder Arm (16, 17) die Zähne (8a) des Zahnrads (8) in einer ersten Schwenkrichtung des Hebels antreibt und in der zweiten Schwenkrichtung über sie hinweg gleitet, ohne sie zu bewegen.

7. Steuerungsanordnung nach den Ansprüchen 5 oder 6, **dadurch gekennzeichnet, dass** die Klinkeneinrichtung (14) zu beiden Seiten bezogen auf die ausgekuppelte Stellung zufolge der Wirkung einer Stange (13) schwenkt, die im inneren des Hebels zu beiden Seiten bezogen auf die mittige Entkuppelstellung gleitet.

8. Steuerungseinrichtungen nach Anspruch 7, **dadurch gekennzeichnet, dass** es die Betätigung der Platte (12) einer ersten Feder (21) ermöglicht, die Stange (13) von der Klinkeneinrichtung (14) weg zu ziehen derart, dass diese in eine erste Kuppelstellung geschwenkt wird.

9. Steuerungseinrichtungen nach Anspruch 7, **dadurch gekennzeichnet, dass** der Schwenkhebel einen Umkehrknopf (24) aufweist, dessen Betätigung die Stange (13) zu der Klinkenanordnung (14) hin bewegt in der Weise, dass diese in eine zweite Kupplungsstellung geschwenkt wird.

10. Steuerungseinrichtungen nach Anspruch 8 oder, **dadurch gekennzeichnet, dass** der Schwenkhebel (1) einen innen liegenden Riegel aufweist, der bei der Betätigung der Platte (12) nach innen bewegt wird, um die Stange (13) freizugeben.

11. Steuerungseinrichtungen nach Anspruch 10, **dadurch gekennzeichnet, dass** die Stange einen Zapfen (19) trägt, der mit einer Öffnung (23) in Eingriff steht, die in dem Riegel (22) enthalten ist, in der Weise, dass die Längsbewegung der Stange (13) nach beiden Seiten bezogen auf deren Mittelstellung freigegeben ist, wenn der Riegel (22) durch die Platte (12) nach innen zurückgestoßen ist.

12. Steuerungseinrichtung nach Anspruch 9, 10 oder 11, **dadurch gekennzeichnet, dass** sie eine zweite Feder (28) aufweist, die den Riegel (22) zur Außenseite des Hebels hin vorspannt in der Weise, dass die Stange (13) mittels des Zapfens (19) und der Öffnung (22) beim Freigeben der Platte (12) in ihre Mittelstellung zurückbewegt wird.

13. Steuerungseinrichtungen nach Anspruch 10, 11 oder 12, **dadurch gekennzeichnet, dass** der Riegel (22) die Stange (13) in der zentralen Stellung hält, wenn die Platte (12) freigegeben ist.
